# EUROPÄISCHE PATENTANMELDUNG

(11) **EP 3 698 927 A1**
(43) Veröffentlichungstag der Anmeldung: **26.08.2020**
(21) Anmeldenummer: 20158093.3
(22) Anmeldetag: 18.02.2020
(51) Int. Cl.: B25H 7/00, B23D 21/00, B23D 33/00

(54) **MARKIERUNGSVORRICHTUNG ZUM ANBRINGEN EINER MARKIERUNG AN DER AUSSENSEITE EINES ROHRLEITUNGSSTÜCKS**

(30) Priorität: 19.02.2019 DE 202019100941 U
(71) Anmelder: Wiegel Gebäudetechnik GmbH, 95326 Kulmbach (DE)
(72) Erfinder: Mödder, Matthias, 95326 Kulmbach (DE)
(74) Vertreter: Jannig & Repkow Patentanwälte PartG mbB

(57) **Zusammenfassung**

Es wird eine Markierungsvorrichtung zum Anbringen einer Markierung an der Außenseite eines Rohrleitungsstücks beschrieben. Die beschriebene Markierungsvorrichtung zeichnet sich dadurch aus, dass sie eine Positionierungsvorrichtung aufweist, durch welche eine die Markierung erzeugende Markierungserzeugungsvorrichtung automatisch so in Bezug zu einem benachbarten Rohrleitungsstück-Ende positioniert wird, dass die durch die Markierungserzeugungsvorrichtung auf dem Rohrleitungsstück zu erzeugende Markierung einen Abstand zum Rohrleitungsstück-Ende aufweist, welcher der vorgeschriebenen Einstecktiefe des Rohrleitungsstück-Endes in ein daran anzubringendes Fitting entspricht.

## Beschreibung

Die vorliegende Erfindung betrifft eine Markierungsvorrichtung zum Anbringen einer Markierung an der Außenseite eines Rohrleitungsstücks.

Das Anbringen einer Markierung auf einem Rohrleitungsstück ist beispielsweise, aber nicht ausschließlich bei der Gasund/oder Wasserleitungsinstallation in Gebäuden, insbesondere bei der Verbindung zweier Rohrleitungsstücke durch ein Pressfitting sehr vorteilhaft.

Damit eine unter Verwendung eines Pressfittings hergestellte Rohrleitungsverbindung zuverlässig dicht ist und bleibt, ist es unter anderem erforderlich, dass die zu verbindenden Rohrleitungsstücke bestimmungsgemäß weit in das Fitting hineinragen. Wenn dies aus welchem Grund auch immer bei der Installation nicht beachtet wird, besteht ein hohes Risiko, dass die Verbindung nicht dicht ist oder - noch schlimmer - irgendwann undicht wird. Durch an der undichten Stelle austretendes Wasser oder Gas können enorme Schäden entstehen. Häufig wird daher an den Enden der miteinander zu verbindenden Rohrleitungsstücke in einem der vorgeschriebenen Einstecktiefe entsprechenden Abstand vom Rohrleitungsende von Hand eine Markierung auf dem Rohr angebracht. Bei bestimmungsgemäß verbundenen Rohrleitungsstücken kommt diese Markierung unmittelbar an das Fitting angrenzend zu liegen und ist zumindest teilweise noch sichtbar. Somit kann nach der Rohrleitungsverbindung durch ein Fitting kontrolliert werden, ob die durch das Fitting verbundenen Rohrleitungsstücke bestimmungsgemäß weit in das Fitting eingesteckt sind.

Allerdings sind auch hierbei Fehler nicht auszuschließen. Erstens besteht die Gefahr, dass die Markierungen versehentlich falsch angezeichnet werden. Zweitens kann nicht ausgeschlossen werden, dass unseriöse Installateure ohne diese Markierungen arbeiten und/oder diese erst nachträglich, also nach erfolgtem Fitting-Einbau am Rohr anbringen. Solche Installationen passieren die Endkontrollen, sind aber dennoch nicht oder jedenfalls nicht dauerhaft dicht.

Ähnliche Probleme können auch auftreten, wenn anstelle von Pressfittings andere Fittings zum Einsatz kommen.

Der vorliegenden Erfindung liegt daher die Aufgabe zugrunde, eine Möglichkeit zu finden, durch welche verhinderbar ist, dass versehentlich oder vorsätzlich falsch platzierte Markierungen auf durch Fittings miteinander zu verbindende Rohrleitungsstücke aufgebracht werden.

Diese Aufgabe wird erfindungsgemäß durch die in Patentanspruch 1 beanspruchte Markierungsvorrichtung gelöst. Das heißt, die Markierungsvorrichtung weist eine Positionierungsvorrichtung auf, durch welche eine die Markierung erzeugende Markierungserzeugungsvorrichtung automatisch so in Bezug zu einem benachbarten Rohrleitungsstück-Ende positioniert wird, dass die durch die Markierungserzeugungsvorrichtung auf dem Rohrleitungsstück zu erzeugende Markierung einen Abstand zum Rohrleitungsstück-Ende aufweist, welcher der vorgeschriebenen Einstecktiefe des Rohrleitungsstück-Endes in ein daran anzubringendes Fitting entspricht.

Durch die automatisch richtige Markierung sind versehentlich falsch angebrachte Markierungen komplett ausgeschlossen. Bei geeigneter Wahl der Art der Markierung, insbesondere bei der Verwendung einer nicht oder nur schwer fälschbaren Markierung, die nach der Montage des Fittings an einem Rohrleitungsstück überhaupt nicht mehr oder nur mit unverhältnismäßig großem Aufwand vom Rohrleitungsstück entfernbar und/oder neu am Rohrleitungsstück anbringbar ist, können auch nachträgliche Falschmarkierungen wirkungsvoll verhindert werden.

In einer besonders vorteilhaften Weiterbildung der Erfindung ist die erfindungsgemäße Markierungsvorrichtung so in einem Rohrschneidegerät integriert, dass die Markierungen gleich schon beim Zerschneiden eines Rohres auf die dabei entstehenden Rohrleitungs-Teile aufgebracht werden, und die Rohrmarkierungen somit ohne oder jedenfalls ohne wesentlichen Mehraufwand erfolgen können.

Weitere vorteilhafte Weiterbildungen der Erfindung sind der folgenden Beschreibung, den Figuren, und den Ansprüchen entnehmbar.

Die Erfindung wird nachfolgend anhand von Ausführungsbeispielen unter Bezugnahme auf die Figuren näher erläutert.

Es zeigen
- Figur 1: schematisch ein Rohrschneidegerät mit einer integrierten Markierungsvorrichtung der hier vorgestellten Art,
- Figur 2: eine perspektivische Ansicht eines in der Figur 1 nur strak schematisiert dargestellten Markierungsrades,
- Figur 3: eine Seitenansicht eines modifizierten Rohrschneidegerätes, bei welchem die in der Figur 1 gezeigten Markierungsräder durch Markierungsräder-Paare ersetzt sind,
- Figur 4: eine perspektivische Darstellung einer sich von einer in der Figur 1 gezeigten Markierungsvorrichtung unterscheidenden weiteren Markierungsvorrichtung,
- Figur 5: eine Seitenansicht der in der Figur 4 gezeigten Markierungsvorrichtung (stirnseitige Ansicht),
- Figur 6: eine andere Seitenansicht der in der Figur 4 gezeigten Markierungsvorrichtung (Figur 5 von rechts gesehen)
- Figur 7: eine Ansicht der in der Figur 4 gezeigten Markierungsvorrichtung von unten,
- Figur 8: eine der Figur 4 entsprechende Ansicht der Markierungsvorrichtung mit in bestimmungsgemäßer Lage befindlicher dickster Rohrleitung, die damit bearbeitet werden kann, und
- Figur 9: eine der Figur 4 entsprechende Ansicht der Markierungsvorrichtung mit in bestimmungsgemäßer Lage befindlicher dünnster Rohrleitung, die damit bearbeitet werden kann.

Wie im Folgenden noch näher beschrieben wird, werden durch die hier vorgestellten Anordnungen, genauer gesagt durch die nachfolgend beschriebenen Rohrschneidegeräte eine Rohrleitung in zwei Teile zerschnitten, und werden einhergehend damit an beiden entstehenden Rohrleitungs-Teilen Markierungen angebracht.

Die Markierungen sind an der Außenseite der Rohrleitungsstücke angebrachte Kontrollmarkierungen, anhand welcher überprüfbar ist, ob durch Pressfittings oder sonstige Fittings miteinander verbundene Rohrleitungsstücke vorschriftsmäßig weit in die Fittings hineinragen.

Die durch die beschriebene Anordnung zu zerschneidende und zu markierende Rohrleitung ist im betrachteten Beispiel eine Wasserrohrleitung. Es könnte sich aber auch um eine Gasleitung oder ein beliebige sonstige Rohrleitung handeln. Die Rohrleitung ist in den Figuren mit dem Bezugszeichen 1 bezeichnet.

Die Rohrleitung 1 besteht im betrachteten Beispiel aus Metall, beispielsweise aus Stahl oder aus Kupfer, könnte aber auch aus einem beliebigen anderen Material oder Materialverbund (z.B. einem Aluminium-Kunststoff-Verbund) bestehen. Bei Bedarf weist die Rohrleitung 1 eine Korrosionsschutzbeschichtung auf, ist also beispielsweise ein verzinktes Stahlrohr.

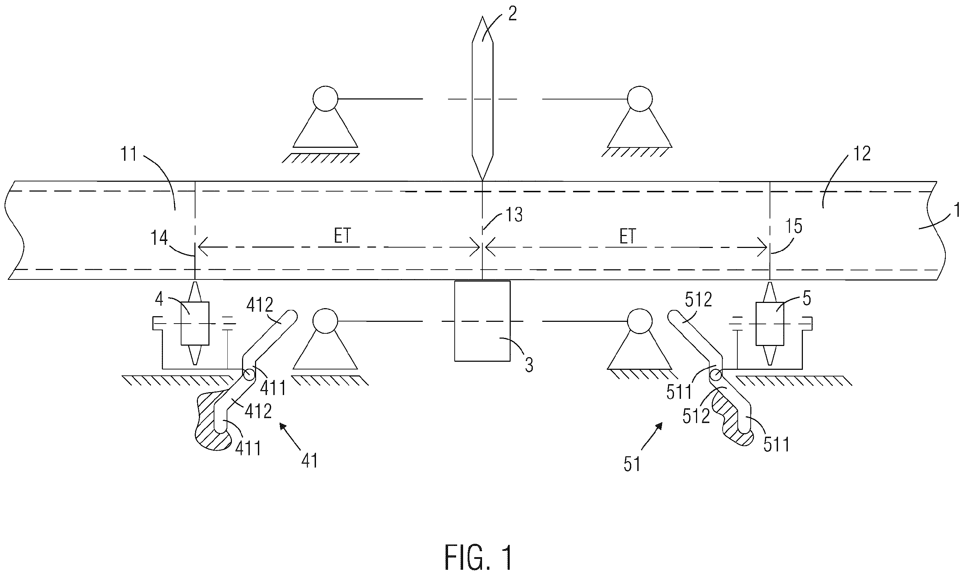

Es wird nun zunächst auf das in der Figur 1 gezeigte Rohrschneidegerät eingegangen. Zur Vermeidung von Missverständnissen sei angemerkt, dass es sich bei der Figur 1 um eine prinzipielle Darstellung zur Erläuterung der Funktion und Wirkung des Rohrschneidegerätes handelt. Die Komponenten des Rohrschneidegerätes sind zumindest teilweise nur schematisch und vereinfacht dargestellt, und es sind aus Gründen der Übersichtlichkeit auch nicht alle Rohrschneidegerät-Komponenten gezeigt.

Die die Rohrleitung zerschneidende Komponente des Rohrschneidegerätes wird im betrachteten Beispiel durch einen Rollenschneider gebildet, könnte aber auch eine beliebige andere Rohrschneidevorrichtung sein. Von diesem Rollenschneider sind in der Figur 1 nur eine Schneidrolle 2 und eine als Gegenlager dienende Führungsrolle 3 gezeigt. In der Praxis sind bei Rollenschneidern üblicherweise mindestens zwei in Umfangsrichtung benachbarte Führungsrollen 3 vorgesehen. In der in der Figur 1 gezeigten schematischen Darstellung ist jedoch nur eine Führungsrolle 3 gezeigt.

Darüber hinaus enthält das Rohrschneidergerät einen in der Figur 1 nicht gezeigten Verstellmechanismus, durch welchen der Abstand zwischen der Schneidrolle 2 und der mindestens einen Führungsrolle 3 veränderbar ist. Im betrachteten Beispiel ist durch den Verstellmechanismus die Führungsrolle 3 zur Schneidrolle 2 hin und von dieser weg bewegbar. Es könnte aber auch vorgesehen werden, dass beide Rollen zueinander hin und voneinander weg bewegt werden.

Das Zerschneiden des Rohres 1 erfolgt wie bei einem herkömmlichen Rollenschneider. Es wird also zunächst durch den Verstellmechanismus der Abstand zwischen der Schneidrolle 2 und der mindestens einen Führungsrolle 3 so eingestellt, dass sowohl die Schneidrolle 2 als auch die mindestens einen Führungsrolle 3 an der Rohrleitung anliegen und mit einer gewissen Kraft dagegen drücken. Sodann wird das Rohrschneidegerät um die Rohrleitung 1 herum gedreht (oder die Rohrleitung 1 um ihre Längsachse gedreht). Diese Bewegung kann manuell oder mit Hilfe eines elektrischen, hydraulischen, pneumatischen oder sonstigen Antriebs erfolgen. Einhergehend damit rollt die Schneidrolle 2 am Außenumfang der Rohrleitung 1 ab und schneidet sich in diese ein. In mehr oder weniger großen zeitlichen Abständen wird durch den Verstellmechanismus der Abstand zwischen der Schneidrolle 2 und der mindestens einen Führungsrolle 3 verringert, wodurch die Schneidrolle 2 immer weiter in die Rohrleitung 1 eindringt. Dies wird fortgeführt / wiederholt, bis die Schneidrolle 2 in eine der Wandstärke der Rohrleitung 1 entsprechende Tiefe in die Rohrleitung 1 eingedrungen und die Rohrleitung 1 damit in zwei Teile, genauer gesagt einen ersten Rohrleitungs-Teil 11 und einen zweiten Rohrleitungs-Teil 12 zerschnitten ist. Die auf Höhe der Schneidrolle 2 liegende Schnittkante zwischen den Rohrleitungs-Teilen 11 und 12 ist in der Figur 1 mit dem Bezugszeichen 13 bezeichnet.

Wie bereits erwähnt, werden einhergehend mit dem Zerschneiden der Rohrleitung 1 Markierungen darauf, genauer gesagt auf die Rohrleitungs-Teile 11 und 12 angebracht. Die hierzu vorgesehene Markierungsvorrichtung umfasst zwei Markierungserzeugungsvorrichtungen 4 und 5, wobei die erste Markierungserzeugungsvorrichtung 4 zum Anbringen einer Markierung auf dem ersten Rohrleitungs-Teil 11 vorgesehen ist, und die zweite Markierungserzeugungsvorrichtung 5 zum Anbringen einer Markierung auf dem zweiten Rohrleitungs-Teil 12 vorgesehen ist.

Es sei bereits an dieser Stelle angemerkt, dass es selbstverständlich auch möglich wäre, nur eine einzige Markierungserzeugungsvorrichtung vorzusehen, also nur an einem der Rohrleitungs-Teile 11, 12 eine Markierung anzubringen.

Im betrachteten Beispiel werden die zu erzeugenden Markierungen durch an den Rohrleitungs-Teilen anzubringende Prägungen gebildet, beispielsweise durch eingeprägte Riffelungen, eingeprägte Nuten, oder eingeprägte sonstige Muster und/oder Schriftzeichen und/oder Zahlen.

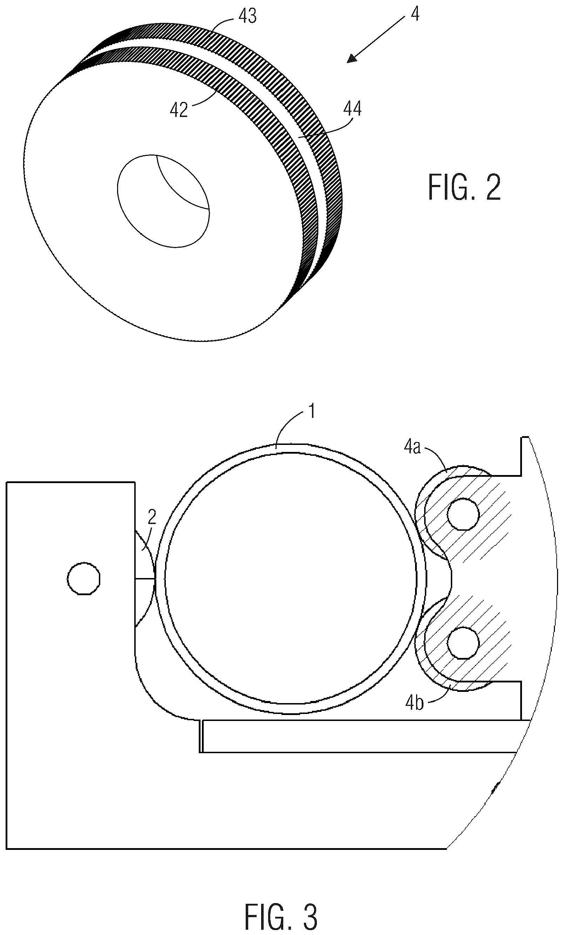

Wie später unter Bezugnahme auf die Figur 2 noch näher beschrieben werden wird, sind die Markierungen im betrachteten Beispiel die Rohrleitungsstücke vollständig umlaufende ringförmige Markierungen. Diese, in der Figur 1 nur schematisch dargestellten Markierungen sind dort mit den Bezugszeichen 14 und 15 bezeichnet, wobei die Markierung 14 die von der ersten Markierungserzeugungsvorrichtung 4 in den ersten Rohrleitungs-Teil 11 eingeprägte Markierung ist, und wobei die Markierung 15 die von der zweiten Markierungserzeugungsvorrichtung 5 in den zweiten Rohrleitungs-Teil 12 eingeprägte Markierung ist.

Die Markierungserzeugungsvorrichtungen 4, 5 werden im betrachteten Beispiel durch die Markierungen in die Rohrleitungs-Teile 11, 12 drückende, und während der Markierung auf dem Außenumfang der Rohrleitungs-Teile 11, 12 abrollende Markierungsräder gebildet. Genauer gesagt werden die Markierungserzeugungsvorrichtungen 4, 5 bei dem in der Figur 1 gezeigten Rohrschneidegerät jeweils durch ein einziges Markierungsrad gebildet.

Das im betrachteten Beispiel zum Einsatz kommende, in der Figur 1 nur stark schematisiert dargestellte Markierungsrad 4 ist in Figur 2 größer und detaillierter dargestellt. Das in der Figur 2 nicht gezeigte Markierungsrad 5 ist identisch ausgebildet.

Das Markierungsrad 4 ist dazu ausgelegt, so auf einer parallel zur Rohrleitung 1 verlaufenden Achse angeordnet zu werden, dass sie um diese Achse oder zusammen mit der Achse drehbar ist und während des Zerschneidens der Rohrleitung 1 durch die Schneidrolle 2 auf der Mantelfläche der Rohrleitung 1 abrollt. Die Mantelfläche des Markierungsrades 4 weist eine Struktur auf, durch welche die zu erzeugende Markierung in die Rohrleitung 1 gedrückt wird. Genauer gesagt sind auf der Mantelfläche des Markierungsrades 4 zwei mit Abstand parallel zueinander verlaufende, das Markierungsrad 4 jeweils vollständig umlaufende und koaxial zu diesem verlaufende Markierungsradringe 42 und 43 ausgebildet. Zwischen den Markierungsradringen 42 und 43 befindet sich eine ringförmige und ebenfalls koaxial zum Markierungsrad 4 verlaufende Nut 44.

Im betrachteten Beispiel weist das Markierungsrad 4 eine Breite von 4 mm auf Die Markierungsradringe 42, 43 sind jeweils 1,5 mm breit, und die dazwischen liegende Nut 44 ist 1 mm breit. Es dürfte einleuchten und bedarf keiner näheren Erläuterung, dass die genannten Maße nur als Beispiel zu verstehen sind, und unabhängig voneinander beliebige andere Maße gewählt werden können.

Wie später noch näher erläutert wird, kann sich das Markierungsrad 4 während des Zerschneidens des Leitungsrohrs 1 nicht in axialer Richtung bewegen. Daher wird durch das Markierungsrad auf der Rohrleitung eine Markierung erzeugt, die aus zwei mit Abstand parallel zueinander verlaufenden, das Leitungsrohr 1 jeweils vollständig umlaufenden und koaxial zu diesem verlaufende Markierungsstreifen bzw. Markierungsringen besteht. Diese Markierungsringe sind im betrachteten Beispiel so angeordnet, dass bei bestimmungsgemäßem Zusammenbau des so markierten Rohrleitungsteils 11 mit einem Fitting der näher an der Schnittkante 13 liegende Markierungsring innerhalb des Fittings zu liegen kommt und von diesem vollständig bedeckt wird, wohingegen der zweite Ring vollständig außerhalb des Fitting zu liegen kommt. Somit kann beim Zusammenbau, aber auch bei späteren Kontrollen besonders schnell und einfach zuverlässig festgestellt werden, ob das Rohrleitungsteil 11 vorschriftsmäßig weit ins Fitting eingesteckt ist.

Es dürfte einleuchten und bedarf keiner näheren Erläuterung, dass die an der Rohrleitung anzubringenden Markierungen auch beliebige andere Muster aufweisen können. Auch andere Muster ermöglichen eine Kontrolle des bestimmungsgemäßen Zusammenbaus.

Wie erwähnt werden die Markierungen durch die Markierungsräder in die Rohrleitung hineingedrückt. Die Markierungsradringe 42, 43 oder sonstigen Markierungsrad-Bereiche für die Erzeugung von Markierungen weisen eine Vielzahl von Erhebungen und Vertiefungen auf, wobei die Erhebungen in die Rohrleitung eindringen und dadurch entsprechende Vertiefungen in der Rohleitung erzeugen, die dann als Markierung sichtbar sind. Anzahl, Form und Höhe der Erhebungen und Vertiefungen der die Markierungen erzeugenden Markierungsrad-Bereiche können an die gegebenen Verhältnisse angepasst sein, als beispielsweise von der Rohrleitungswanddicke, dem Material, aus dem die Rohrleitung besteht, der Dicke von gegebenenfalls vorhandenen Beschichtungen, etc. abhängig gemacht werden. Die Anbringung einer Markierung auf einer Rohrleitung 1 führt vorzugsweise weder zu einer erheblichen Schwächung der Rohrleitung noch zu einer vollständigen Durchdringung einer gegebenenfalls vorhandenen Beschichtung.

Im betrachteten Beispiel ist das Markierungsrad 4 aus Edelstahl 1.2344 mit einer Härte 50+2 HRC gefertigt. Die Markierungsradringe 42, 43, genauer gesagt deren die Markierungen erzeugenden Erhebungen und Vertiefungen sind durch Erodieren entstanden, und zwar nach VDI 3400, Stärke 36, entsprechend einer gemittelten Rauhtiefe R_{z} vom 36 Mikrometern. Der an den Markierungsradringen 42, 43 gemessene Durchmesser des Markierungsrades 4 beträgt im betrachteten Beispiel 15 mm. Die vorstehenden Angaben zum Markierungsrad 4 sind trotz der im Folgenden näher spezifizierten Vorteile eines wie beschrieben ausgebildeten und hergestellten Markierungsrades 4 nur als ein mögliches Beispiel anzusehen. Es besteht keine Einschränkung auf vorstehenden Angaben in Bezug auf Material, Herstellung, technische Daten und Maße.

Ein wie soeben beschrieben ausgebildetes und hergestelltes Markierungsrad 4 erzeugt eine gut sichtbare Markierung, ohne die Rohrleitung 1 nennenswert in Mitleidenschaft zu ziehen. Ein solches Markierungsrad 4 kann sogar problemlos bei verzinkten Rohrleitungen zum Einsatz kommen, da die Zinkschicht durch das Anbringen der Markierung nur etwas dünner, aber nicht komplett durchstoßen oder abgetragen wird. Korrosionstests haben gezeigt, dass an mit Markierungen versehenen Rohrleitungsabschnitten keine erhöhte Korrosionsgefahr oder Korrosionswahrscheinlichkeit besteht. Entsprechendes gilt für Rohrleitungen mit anderen Beschichtungen.

Die Markierungsräder 4, 5 sind durch zugeordnete Positionierungsvorrichtungen der Markierungsvorrichtung bestimmungsgemäß positionierbar. Sie sind durch die Positionierungsvorrichtungen relativ zu den Rohrleitungs-Teilen 11, 12 bewegbar, und zwar sowohl in axialer Richtung der Rohrleitungs-Teile 11, 12 als auch in radialer Richtung der Rohrleitungs-Teile 11, 12.

Durch die Bewegung der Markierungsräder 4, 5 in radialer Richtung der Rohrleitungs-Teile 11, 12 ist der Abstand zwischen den Markierungsrädern 4, 5 und den Rohrleitungs-Teilen 11, 12 veränderbar, und somit zeitlich und örtlich der Beginn und das Ende der Markierungserzeugung festlegbar.

Im betrachteten Beispiel erfolgen das Zerschneiden der Rohrleitung und das Markieren gleichzeitig. Demzufolge werden die Markierungsräder 4, 5 durch die Positionierungsvorrichtung so positioniert, dass sie zu Beginn des Schneidvorganges an den Rohrleitungs-Teilen 11, 12 anliegen und mit mehr oder weniger großer Kraft dagegen drücken.

Durch die Bewegung der Markierungsräder 4, 5 in axialer Richtung der Rohrleitungs-Teile 11, 12 ist der in der Figur 1 mit ET bezeichnete Abstand zwischen den durch die Markierungsrädern 4, 5 erzeugten Markierungen 14, 15 und der Schnittkante 13 festlegbar.

Hierdurch wird dem Umstand Rechnung getragen, dass der Abstand ET zwischen den Markierungen 14, 15 und der Schnittkante 13 der vorgeschriebenen Einstecktiefe der Rohrleitungsteil-Enden in daran anzubringendes Fittings entsprechen, und die vorgeschriebene Einstecktiefen für unterschiedliche Rohrleitungsteil-Fitting Kombinationen unterschiedlich groß ist. Insbesondere hängt die vorgeschriebene Einstecktiefe vom Außendurchmesser der Rohrleitungs-Teile ab.

Im betrachteten Beispiel werden die Markierungserzeugungsvorrichtungen 4, 5 durch die Positionierungsvorrichtung automatisch so in Bezug zu den benachbarten Rohrleitungsteil-Enden, also so in Bezug zur Schnittkante 13 positioniert, dass die durch die Markierungserzeugungsvorrichtungen 4, 5 auf den Rohrleitungs-Teilen 4, 5 zu erzeugenden Markierungen 14, 15 einen Abstand zu den Rohrleitungsstück-Enden aufweisen, welcher der vorgeschriebenen Einstecktiefe des Rohrleitungsteil-Enden in das daran anzubringende Fitting entspricht.

Dies wird dadurch erreicht, dass die Markierungserzeugungsvorrichtungen 4, 5 nicht frei bewegbar sind, sondern dass entweder sie selbst oder eine sie tragende Markierungsvorrichtungskomponente nur entlang einer Führungskurve bewegbar sind. Im betrachteten Beispiel ist für die Markierungserzeugungsvorrichtungen 4, 5 jeweils eine eigene Führungskurve vorgesehen, nämlich eine Führungskurve 41 für die Markierungserzeugungsvorrichtung 4, und eine Führungskurve 51 für die Markierungserzeugungsvorrichtung 5. Die Führungskurven 41, 51 sind Bestandteil der erwähnten Positionierungsvorrichtung zur bestimmungsgemäßen Positionierung der Markierungserzeugungsvorrichtungen 4, 5 in Bezug zur Rohrleitung.

Wie aus der Figur 1 ersichtlich ist, weisen die Führungskurven 41, 51 abwechselnd rechtwinklig zu den Längsachsen der Rohrleitungs-Teile 11, 12 verlaufende erste Abschnitte 411, 511 und schräg dazu verlaufende zweite Abschnitte 412, 512 auf.

Die Markierungserzeugungsvorrichtungen 4, 5 werden vor dem Beginn des Schneidens / Markierens so weit an die Rohrleitungs-Teile 11, 12 heranbewegt, bis sie eine zum Markieren geeignete Relativlage haben. Im betrachteten Beispiel werden die Markierungserzeugungsvorrichtungen 4, 5 so weit an die Rohrleitungs-Teile 11, 12 heranbewegt, bis sie daran anschlagen. Da die Markierungserzeugungsvorrichtungen 4, 5 nur entlang der Führungskurven 41, 51 bewegbar sind, wird durch eine Bewegung der Rohrleitungs-Teile 11, 12 in radialer Richtung der Rohrleitungs-Teile 11, 12 größtenteils zugleich auch eine Bewegung in axialer Richtung der Rohrleitungs-Teile 11, 12 erzwungen. Genauer gesagt bewirkt eine Bewegung der Markierungserzeugungsvorrichtungen 4, 5 zu den Rohrleitungs-Teilen 11, 12 hin auch eine Bewegung der Markierungserzeugungsvorrichtungen 4, 5 in axialer Richtung der Rohrleitungs-Teile 11, 12 zur Schnittkante 13 hin. Das heißt je kleiner der Außendurchmesser der Rohrleitungs-Teile 11, 12 ist, desto weiter werden die Markierungserzeugungsvorrichtungen 4, 5 zur Schnittkante 13 hin bewegt, und desto kleiner wird der Abstand ET zwischen Schnittkante 13 und Markierungen 14, 15. Damit wird dem Umstand Rechnung getragen, dass die vorgeschriebene Einstecktiefe des Rohrleitungsteil-Enden in das daran anzubringende Fitting mit geringer werdendem Außendurchmesser der Rohrleitungs-Teile 11, 12 abnimmt.

Dies ist jedenfalls im Bereich der schräg verlaufenden zweiten Abschnitte 412, 512 der Führungskurven 41, 51 der Fall.

Im Bereich der ersten Abschnitte 411, 512 der Führungskurven 41, 51 findet keine Bewegung der Markierungserzeugungsvorrichtungen 4, 5 in axialer Richtung der Rohrleitungs-Teile 11, 12 statt. Dieser Bereich der Führungskurven 41, 51 wird durchlaufen, während die Markierungserzeugungsvorrichtungen 4, 5 gerade eine Markierung an den Rohrleitungs-Teile 11, 12 anbringen (oder anbringen könnten). Durch die ersten Abschnitte 411, 511 der Führungskurven 41, 51 wird also erreicht, dass sich die Markierungserzeugungsvorrichtungen 4, 5 während des Markierens nur radial zu den Rohrleitungs-Teilen 11, 12 hin bewegen. Eine gleichzeitige axiale Bewegung würde zu einer unerwünschten spiralförmigen Markierung führen.

Die vor dem Markierungsbeginn erfolgende anfängliche Positionierung der Markierungserzeugungsvorrichtungen 4, 5 kann einhergehend mit der vor dem Schneidebeginn durchzuführenden bestimmungsgemäßen Positionierung von Schneidrolle 2 und Führungsrolle 3 durch den vorstehend bereits erwähnten Verstellmechanismus erfolgen. Hierfür kann, muss aber nicht, eine entsprechende Kopplung mit dem Verstellmechanismus der Schneidvorrichtung vorgesehen sein. Genauer gesagt können hierzu beispielsweise die Führungsrolle 3 und die Markierungserzeugungsvorrichtungen 4, 5 so miteinander gekoppelt sein, dass sich die Markierungserzeugungsvorrichtungen 4, 5 automatisch in der Position befinden, die sie zur Markierung der Rohrleitung 1 innehaben müssen, wenn und so lange die Führungsrolle 3 in Kontakt mit der Rohrleitung 1 steht. Eine Bewegung der Führungsrolle 3 zur Rohrleitung hin hat automatisch eine entsprechende Bewegung der Markierungserzeugungsvorrichtungen 4, 5 zur Rohrleitung 1 zur Folge, wobei sich die Markierungserzeugungsvorrichtungen 4, 5 hierbei noch gleichzeitig wie von den (nicht bewegbaren) Führungskurven 41, 51 vorgegeben in axialer Richtung der Rohrleitung 1 bewegen können.

Im betrachteten Beispiel ist es so, dass die Markierungserzeugungsvorrichtungen 4, 5 durch die in der Figur 2 gezeigten und unter Bezugnahme darauf beschriebenen Markierungsräder gebildet werden, und dass diese Markierungsräder 4, 5 und die Führungsrolle 3 koaxial angeordnet sind. Die Durchmesser der Markierungsräder 4, 5 sind vorzugsweise gleich groß und sind im betrachteten Beispiel geringfügig, beispielsweise 0,1 mm größer als der Durchmesser der Führungsrolle, wobei beides nicht zwingend erforderlich ist und unter anderem von der Art der Markierung abhängen kann.

Im vorstehend beschriebenen Fall hat der Verstellmechanismus eine Doppelfunktion. Er dient einerseits dazu, die Schneidrolle 2 und die Führungsrolle 3 in ihre bestimmungsgemäße Relativlage zu bringen, und ist zugleich Bestandteil der erwähnten Positionierungsvorrichtung zur bestimmungsgemäßen Positionierung der Markierungserzeugungsvorrichtungen 4, 5 in Bezug zur Rohrleitung 1.

Mit dem Beginn des Zerschneidens der Rohrleitung 1 beginnt automatisch auch das Markieren der Rohrleitungs-Teile 11, 12. Es kann vorgesehen werden, die Markierungserzeugungsvorrichtungen 4, 5 während des Markierens zu verstellen, genauer gesagt kontinuierlich oder Stück für Stück weiter zu den Rohrleitungs-Teile 11, 12 hin zu bewegen (Durchlaufen des ersten Abschnitts 411, 511 der Führungskurven 41, 51). Diese Nachstellung kann zusammen mit der während des Schneidens erforderlichen Nachstellung von Schneidrolle 2 und Führungsrolle 3 erfolgen und beispielsweise durch eine entsprechende Kopplung der Mechanismen automatisch einhergehend miteinander erfolgen.

Im Ergebnis wird durch die beschriebene Anordnung also eine Rohrleitung in zwei Teile zerschnitten, und werden zugleich automatisch im richtigen Abstand von den Leitungsrohr-Enden Kontrollmarkierungen auf die entstehenden Rohrleitungs-Teile für die Kontrolle einer vorschriftsmäßigen Fitting-Montage aufgebracht.

Die vorliegend beschriebene Anordnung lässt sich auf mannigfaltige Art und Weise modifizieren.

Unter anderem besteht keine zwingende Notwendigkeit, dass die Markierung wie im vorstehend beschriebenen Beispiel durch eine Prägung gebildet wird. Die Markierung kann auch eine Gravur sein, oder eine durch einen Laser erzeugte Markierung sein, oder eine durch Bedrucken der Rohrleitung, beispielsweise eine durch einen Tintenstrahldruck erzeugte Markierung sein, oder eine beliebige sonstige Markierung sein.

Vorzugsweise ist die erzeugte Markierung jedoch fälschungssicher. Insbesondere sollte sie so beschaffen sein, dass sie nicht oder jedenfalls nicht mit einem vertretbaren Aufwand vollständig von der Rohrleitung entfernbar ist. Zumindest sollte eine erfolgte Entfernung der Markierung bei einer Kontrolle erkennbar sein.

Im betrachteten Beispiel ist vorgesehen, die Markierung vor der Montage des Fittings an der Rohrleitung anzubringen. Dies ist zwingend notwendig, denn nur anhand der vor der Fitting-Montage erfolgten Markierung kann überprüft werden, ob die Rohrleitung vorschriftsmäßig weit in das Fitting eingesteckt ist.

Vorzugsweise ist die Markierung so angeordnet und beschaffen, dass Unterschiede zwischen einer vor der Fitting-Montage angebrachten Markierung und einer nach der Fitting-Montage angebrachten Markierung erkennbar sind. Hierzu könnte beispielsweise wie bei den vorstehend beschriebenen Beispielen vorgesehen werden, dass die Markierung so angeordnet und beschaffen ist, dass bei bestimmungsgemäßer Montage des Fittings an der Rohrleitung ein Teil, aber eben nur ein Teil der Markierung durch das Fitting bedeckt wird.

Wie vorstehend bereits angedeutet wurde, kann die Markierung grundsätzlich ein beliebiges Aussehen haben, also beliebige Muster, Symbole, Schriftzeichen, Ziffern etc. enthalten. Auch die Verwendung geschützter Marken, Designs, oder dergleichen kann sich als vorteilhaft erweisen.

Es kann sich als vorteilhaft erweisen, wenn die Markierung Informationen enthält, aus welchen sich bestimmte interessierende Fakten ermitteln lassen. Hierbei könnte es sich beispielsweise um Informationen handeln,
- aus welchen der Abstand der Markierung vom Rohrleitungsstück-Ende ermittelbar ist, und/oder
- aus welchen der Außendurchmesser des Rohrleitungsstücks, für welchen die angebrachte Markierung bestimmt ist, ermittelbar ist, und/oder
- Informationen enthält, aus welchen der Fitting-Typ, für welchen die angebrachte Markierung bestimmt ist, ermittelbar ist.

Die vorstehend unter Bezugnahme auf die Figur 1 beschriebene Markierungsvorrichtung ist für Rohrleitungsstücke mit unterschiedlichen Außendurchmessern ausgelegt, und die Markierungserzeugungsvorrichtungen können durch die Positionierungsvorrichtungen in einem veränderbaren Abstand vom benachbarten Rohrleitungsstück-Ende positioniert werden. Auch hierauf besteht keine Einschränkung. Es könnte stattdessen auch vorgesehen werden, dass die Markierungsvorrichtung nur für Rohrleitungsstücke mit einem ganz bestimmten Außendurchmesser ausgelegt ist, und die Positionierungsvorrichtung die Markierungserzeugungsvorrichtung nur in einem nicht veränderbaren Abstand vom benachbarten Rohrleitungsstück-Ende positioniert. Mit einer solchen Markierungsvorrichtung könnten zwar ausschließlich Rohrleitungsstücke mit dem ganz bestimmten Außendurchmesser markiert werden, doch könnte eine solche Markierungsvorrichtung erheblich einfacher und billiger hergestellt und einfacher bedient werden.

Unabhängig von alledem ist es natürlich auch nicht zwingend erforderlich, die Markierungsvorrichtung wie beschrieben in ein Rohrschneidegerät zu integrieren. Einerseits könnte die Integration auch beliebig anders erfolgen, und andererseits muss auch keine Integration in ein Rohrschneidegerät erfolgen. Die Markierungsvorrichtung könnte auch ein eigenständiges Gerät ohne Zusatzfunktion oder Bestandteil eines Gerätes mit anderen Zusatzfunktionen sein.

Insbesondere in diesem Fall besteht auch keine Notwendigkeit, zwei Markierungserzeugungsvorrichtungen zur gleichzeitigen Markierung von zwei Rohrleitungs-Stücken vorzusehen. Im Allgemeinen dürfte bei einem solchen Gerät eine einzige Markierungserzeugungsvorrichtung ausreichen , mit welchem nur immer ein einziges Rohrleitungs-Stück markierbar ist.

Andererseits kann vorgesehen werden, dass jeder der herzustellenden Markierungen durch zwei (oder mehr) Markierungsräder erzeugt wird, also das einzelne Markierungsrad 4 zur Herstellung der Markierung 14 wie beispielhaft in der Figur 3 gezeigt durch ein Markierungsrad-Paar 4a, 4b ersetzt wird.

Die das Markierungsrad-Paar bildenden Markierungsräder 4a, 4b sind im betrachteten Beispiel genau übereinander, also ohne axialen Versatz angeordnet. Die Markierungsräder 4a und 4b sind identisch ausgebildet. Genauer gesagt sind sie vorliegend wie das in der Figur 2 gezeigte und unter Bezugnahme darauf beschriebene Markierungsrad 4 ausgebildet. Die Markierungsräder 4a und 4b erzeugen identische Markierungen, die einandergenau übereinander zu liegen kommen.

Es wäre auch denkbar, verschieden ausgebildete Markierungsräder 4a und 4b vorzusehen, die unterschiedliche Markierungen erzeugen, welche zusammen die zu erzeugende Markierung ergeben. Die Markierungsräder 4a und 4b könnten also unterschiedliche Teile der herzustellenden Markierung erzeugen. Beispielsweise könnte das eine Markierungsrad 4a nur den Markierungsradring 42 aufweisen und somit nur den einen der beiden Markierungsringe erzeugen, und das andere Markierungsrad 4b könnte nur den Markierungsradring 43 aufweisen und somit nur den anderen der beiden Markierungsringe erzeugen.

Das Markierungsrad-Paar 4a, 4b ist wie das Markierungsrad 4 aus der Figur 1 bewegbar. Das heißt es ist durch den Verstellmechanismus, und die Positionierungsvorrichtung 41 sowohl in axialer Richtung der Rohrleitung 1 als auch senkrecht dazu verschiebbar, wobei der Verschiebeweg wiederum durch die Führungskurve 41 vorgegeben wird.

Das Markierungsrad 5 aus Figur 1 kann ebenfalls durch ein Markierungsrad-Paar ersetzt werden, welches dem Markierungsrad-Paar 4a, 4b entspricht.

Durch vorstehend vorgestellten Markierungsvorrichtungen, wird auf einer Rohrleitung 1 eine Markierung angebracht, deren Abstand vom Rohrleitungsende / der Schnittkante 13 vom Außendurchmesser der Rohrleitung 1 abhängt. Genauer gesagt wird eine die Markierung anbringende Markierungserzeugungsvorrichtung 4, 5 vor dem Markierungsbeginn axial an die Position verschoben, die sie innehaben muss, um an der richtigen Stelle eine Markierung anzubringen. Es ist also für alle Rohrleitungs-Durchmesser eine einzige Markierungserzeugungseinrichtung 4, 5 bzw. ein einziges Markierungserzeugungs-Paar vorgesehen.

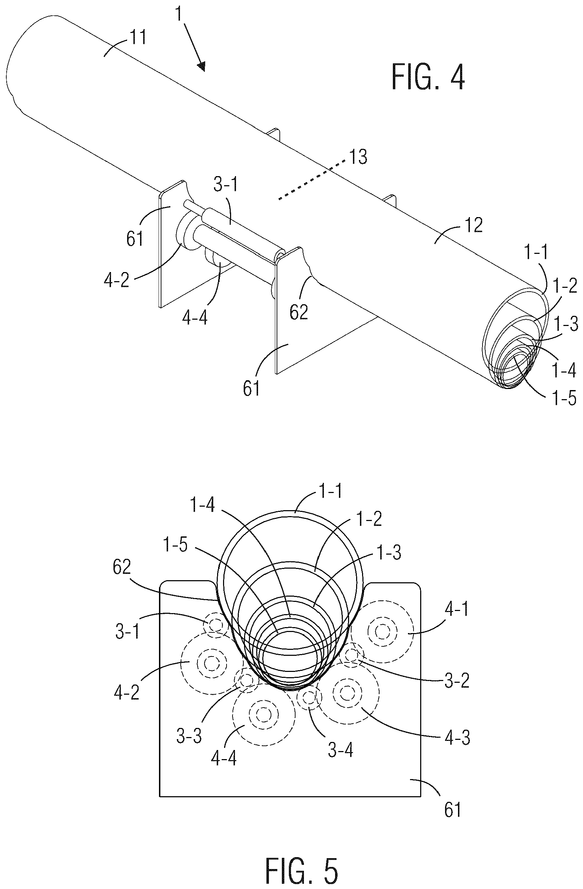

Im Folgenden wird unter Bezugnahme auf die Figuren 4 bis 9 eine abgewandelte weitere Markierungsvorrichtung beschrieben. Diese weitere Markierungsvorrichtung kann ebenfalls Markierungen an Rohrleitungen mit unterschiedlichen Durchmessern anbringen, wobei auch hier der Abstand der zu erzeugenden Markierung vom Rohrleitungsende / der Schnittkante 13 vom Außendurchmesser der Rohrleitung 1 abhängt. Anders als bei den vorhergehenden Markierungsvorrichtungen ist jedoch für jeden Abstand vom Rohrleitungsende / der Schnittkante 13, in welchem die Markierungsvorrichtung eine Markierung anbringen können soll, eine eigene, axial nicht verschiebbare Markierungserzeugungsvorrichtung vorgesehen.

Die Markierungserzeugungsvorrichtungen werden im betrachteten Beispiel durch Markierungsräder gemäß Figur 2 gebildet, können aber auch beliebige andere Markierungserzeugungseinrichtungen sein.

Die weitere Markierungsvorrichtung ist auch wieder Bestandteil eines Rohrschneidegerätes. Die Figuren 4 bis 9 zeigen jedoch nur die Markierungsvorrichtung des Rohrschneidegerätes. Die nicht gezeigte Schneidrolle des Rohrschneidegerätes zerschneidet die Rohrleitung 1 an der in der Figur 4 mit dem Bezugszeichen 13 angedeuteten Schnittkante von oben her.

Wie insbesondere aus den Figuren 5 bis 7 ersichtlich ist, enthält die Markierungsvorrichtung Markierungsräder 4-1 bis 4-4 und 5-1 bis 5-4, wobei die Markierungsräder 4-1 bis 4-4 zum Markieren des ersten Rohrleitungteils 11 vorgesehen sind, und die Markierungsräder 5-1 bis 5-4 zum Markieren des zweiten Rohrleitungteils 12 vorgesehen sind. Die Markierungsräder 4-1 und 5-1, sowie die Markierungsräder 4-2 und 5-2, sowie die Markierungsräder 4-3 und 5-3, sowie die Markierungsräder 4-4 und 5-4 sind jeweils auf einer gemeinsamen Achse angeordnet, und um diese Achse oder zusammen mit dieser Achse drehbar.

Wie insbesondere aus den Figuren 5 bis 7 ersichtlich ist, enthält die Markierungsvorrichtung ferner Führungsrollen 3-1 bis 3-4, welche als Ersatz für die Führungsrolle 3 des in der Figur 1 gezeigten Rohrschneidegerätes dienen. Die Achsen der Führungsrollen 3-1 bis 3-4 verlaufen parallel zu den Achsen der Markierungsräder 4-1 bis 4-4 und 5-1 bis 5-4.

Sowohl die Führungsrollen 3-1 bis 3-4 als auch die Markierungsräder 4-1 bis 4-4 und 5-1 bis 5-4 sind um ihre Achsen drehbar, ansonsten aber nicht relativ zueinander bewegbar. Sie können nur zusammen (als eine zusammenhängende, im Folgenden als Führungsrollen-Markierungsräder-Einheit bezeichnete Einheit) durch den in den Figuren nicht gezeigten Verstellmechanismus zur Rohrleitung hin und von dieser weg bewegt werden. Ähnlich wie bei dem in der Figur 1 gezeigten Rohrschneidegerät ist durch den Verstellmechanismus, genauer gesagt durch eine von diesem bewirkte Bewegung von Führungsrollen-Markierungsräder-Einheit und/oder Schneidrolle der Abstand zwischen der Schneidrolle und der Führungsrollen-Markierungsräder-Einheit veränderbar.

Im Folgenden werden von den Markierungsrädern 4-1 bis 4-4 und 5-1 bis 5-4 nur noch die Markierungsräder 4-1 bis 4-4 berücksichtigt. Die Ausführungen hierzu gelten jedoch für die Markierungsräder 5-1 bis 5-4 entsprechend.

Wie aus der Figur 5 ersichtlich ist, folgen im betrachteten Beispiel die Führungsrollen 3-1 bis 3-4 und die Markierungsräder 4-1 bis 4-4 abwechselnd aufeinander und sind in etwa entlang einer halbkreisförmigen Kurve angeordnet. Ob die Kurve halbkreisförmig ist oder nicht ist jedoch von untergeordneter Bedeutung. Auf die Relativlagen der Führungsrollen 3-1 bis 3-4 und der Markierungsräder 4-1 bis 4-4 wird später noch genauer eingegangen.

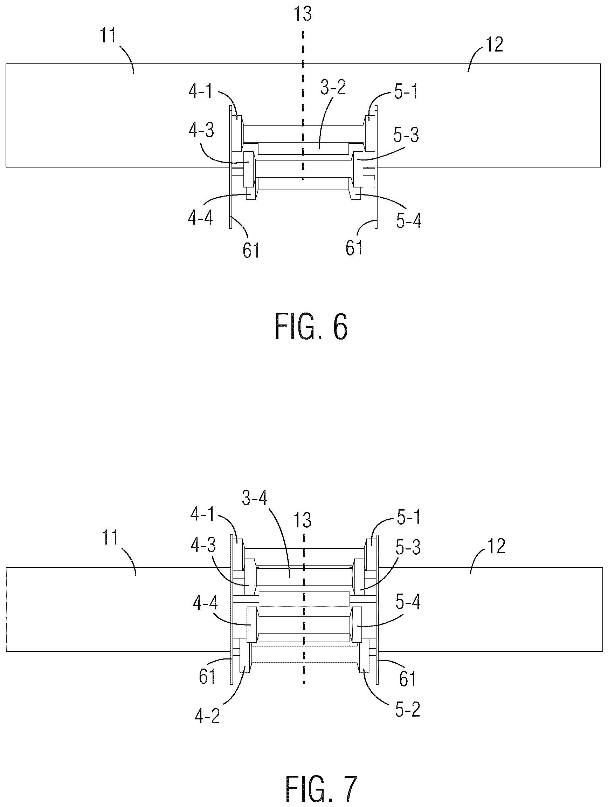

Wie insbesondere aus den Figuren 6 und 7 ersichtlich ist, befinden sich die Markierungsräder 4-1 bis 4-4 in unterschiedlichen axialen Positionen. Genauer gesagt haben die Markierungsräder und damit auch die durch diese erzeugten Markierungen unterschiedliche axiale Abstände von der Schnittkante 13. Das Markierungsrad 4-1 und die durch dieses erzeugte Markierung haben den größten Abstand zur Schnittkante 13, das Markierungsrad 4-2 und die durch dieses erzeugte Markierung haben den zweitgrößten Abstand zur Schnittkante 13, das Markierungsrad 4-3 und die durch dieses erzeugte Markierung haben den drittgrößten Abstand zur Schnittkante 13, und das Markierungsrad 4-4 und die durch dieses erzeugte Markierung haben den kleinsten Abstand zur Schnittkante 13.

Dem liegt folgende Überlegung zugrunde: das Rohrschneidegerät ist zum Schneiden und Markieren von Rohrleitungen mit ganz bestimmten verschiedenen Außendurchmessern ausgelegt. Dies ist übrigens auch beim Rohrschneidegerät gemäß Figur 1 und den darauf basierenden modifizierten Rohrschneidegeräten der Fall. Dort sind die bearbeitbaren Außendurchmesser durch den Verlauf der Führungskurven 41, 51 vorgegeben. Vorliegend sind die bearbeitbaren Außendurchmesser durch die axialen Positionen der Markierungsräder 4-1 bis 4-4 vorgegeben. Die axial nicht verschiebbaren Markierungsräder erzeugen auf der Rohrleitung 1 Markierungen, die einen durch die axiale Position des jeweiligen Markierungsrades vorgegebenen Abstand von der Schnittkante 13 aufweisen. Durch das Rohrschneidegerät können daher nur Rohrleitungen mit Außendurchmessern bearbeitet werden, die genau dort eine Markierung benötigen, wo eine der vorhandenen Markierungsräder eine Markierung erzeugen kann. Dabei ist jedem der durch das Rohrschneidegerät bearbeitbaren Außendurchmesser ein ganz bestimmtes Markierungsrad zugeordnet. Das jeweils zugeordnete Markierungsrad ist dasjenige Markierungsrad, das die Markierung dort erzeugt, wo sie sich bei dem gerade bearbeiteten Außendurchmesser befinden muss.

Im betrachteten Beispiel können Rohrleitungen mit fünf verschiedenen Außendurchmessern bearbeitet (zerschnitten und einhergehend damit vorschriftsmäßig markiert) werden. Diese fünf verschiedenen Rohrleitungen sind in den Figuren mit den Bezugszeichen 1-1 bis 1-5 bezeichnet, wobei die Rohrleitung 1-1 den größten der bearbeitbaren Außendurchmesser aufweist, und die Rohrleitung 1-5 den kleinsten bearbeitbaren Außendurchmesser aufweist. Zwei der Rohleitungen, genauer gesagt die Rohrleitungen 1-4 und 1-5 weisen so geringe Außendurchmesser-Unterschiede auf, dass die auf diesen Rohrleitungen anzubringenden Markierungen den gleichen Abstand zur Schnittkante 13 aufweisen können und daher durch das selbe Markierungsrad, nämlich durch das Markierungsrad 4-4 erzeugt werden können.

Um die Rohrleitung 1-1 vorschriftsmäßig zu markieren, muss dafür gesorgt werden, dass die Rohrleitung 1-1 durch das Markierungsrad 4-1 markiert wird und nur durch dieses Markierungsrad markiert werden kann. Die Rohrleitung 1-2 muss und darf nur durch das Markierungsrad 4-2 markiert werden, die Rohrleitung 1-3 muss und darf nur durch das Markierungsrad 4-3 markiert werden, und die Rohrleitungen 1-4 und 1-5 müssen und dürfen nur durch das Markierungsrad 4-4 markiert werden.

Die Führungsrollen 3-1 bis 3-4 und die Markierungsräder 4-1 bis 4-4 sind daher so angeordnet, dass eine zu schneidende Rohrleitung 1, die Schneidrolle und die Führungsrollen-Markierungsräder-Einheit durch den Verstellmechanismus automatisch in die Relativlage gebracht werden, in welcher die Rohrleitung 1 mit der Schneidrolle, dem dem Außendurchmesser der Rohrleitung zugeordneten Markierungsrad, 4-1 bis 4-4, und einer der Führungsrollen 3-1 bis 3-4 in Kontakt stehen. Durch die intelligente Anordnung der Führungsrollen und der Markierungsräder wird insbesondere ausgeschlossen, dass die Rohrleitung mit einem anderen, genauer gesagt mit einem einem anderen Rohrleitungs-Außendurchmesser zugeordneten Markierungsrad, welches ja eine falsch positionierte Markierung erzeugen würde, in Kontakt steht.

Im betrachteten Beispiel sind die Führungsrollen 3-1 bis 3-4 und die Markierungsräder 4-1 bis 4-4 daher so angeordnet,
- dass die den größten Außendurchmesser aufweisende Rohrleitung 1-1 für ein vorschriftsmäßiges Zerschneiden und Markieren mit dem Markierungsrad 4-1 und der Führungsrolle 3-1 in Kontakt stehen muss, wobei der gegenseitige Abstand zwischen dem Markierungsrad 4-1 und der Führungsrolle 3-1 so groß ist, dass die Rohrleitung 1-1 nicht zwischen diese hindurchgelangen kann, aber alle Rohrleitungen mit kleinerem Außendurchmesser, also die Rohrleitungen 1-2 bis 1-5 dazwischen hindurch gelangen können,
- dass die den zweitgrößten Außendurchmesser aufweisende Rohrleitung 1-2 für ein vorschriftsmäßiges Zerschneiden und Markieren mit dem Markierungsrad 4-2 und der Führungsrolle 3-2 in Kontakt stehen muss, wobei der gegenseitige Abstand zwischen dem Markierungsrad 4-2 und der Führungsrolle 3-2 so groß ist, dass die Rohrleitung 1-2 und Rohrleitungen mit größerem Außendurchmesser nicht zwischen diese hindurchgelangen können, aber alle Rohrleitungen mit kleinerem Außendurchmesser, also die Rohrleitungen 1-3 bis 1-5 dazwischen hindurch gelangen können,
- dass die den drittgrößten Außendurchmesser aufweisende Rohrleitung 1-3 für ein vorschriftsmäßiges Zerschneiden und Markieren mit dem Markierungsrad 4-3 und der Führungsrolle 3-3 in Kontakt stehen muss, wobei der gegenseitige Abstand zwischen dem Markierungsrad 4-3 und der Führungsrolle 3-3 so groß ist, dass die Rohrleitung 1-3 und Rohrleitungen mit größerem Außendurchmesser nicht zwischen diese hindurchgelangen können, aber alle Rohrleitungen mit kleinerem Außendurchmesser, also die Rohrleitungen 1-4 bis 1-5 dazwischen hindurch gelangen können, und
- dass die die kleinsten Außendurchmesser aufweisenden Rohrleitungen 1-4 und 1-5 für ein vorschriftsmäßiges Zerschneiden und Markieren mit dem Markierungsrad 4-4 und der Führungsrolle 3-4 in Kontakt stehen müssen, wobei der gegenseitige Abstand zwischen dem Markierungsrad 4-4 und der Führungsrolle 3-4 so groß ist, dass keine der Rohrleitungen 1-1 bis 1-5 zwischen diese hindurchgelangen kann.

Damit die Rohrleitung 1-2 mit dem Markierungsrad 4-2 und der Führungsrolle 3-2 in Kontakt kommen kann, muss sie zuvor zwischen dem Markierungsrad 4-1 und der Führungsrolle 3-1 hindurchgelangt sein. Damit die Rohrleitung 1-3 mit dem Markierungsrad 4-3 und der Führungsrolle 3-3 in Kontakt kommen kann, muss sie zuvor zusätzlich zwischen dem Markierungsrad 4-2 und der Führungsrolle 3-2 hindurchgelangt sein. Damit die Rohrleitungen 1-4 und 1-5 mit dem Markierungsrad 4-4 und der Führungsrolle 3-4 in Kontakt kommen können, muss sie zuvor zusätzlich zwischen dem Markierungsrad 4-3 und der Führungsrolle 3-3 hindurchgelangt sein.

Zusätzlich weisen die stirnseitigen Wangen 61 eines die Markierungsräder und die Führungsrollen tragenden Gestells Einschnitte 62 mit einer sich von oben nach unten verringernden Breite auf. Diese Einschnitte 62 sind zur Aufnahme der Rohrleitungen 1-1 bis 1-5 ausgelegt und führen die Rohrleitungen (abhängig von deren Außendurchmesser) zu ihrer bestimmungsgemäßen Relativlage in Bezug zu dem Markierungsrad und zu der Führungsrolle, welche der jeweiligen Rohrleitung zugeordnet sind. Die Einschnitte 62 weisen an ihrem oberen Ende eine dem Durchmesser der dicksten bearbeitbaren Rohrleitung 1-1 entsprechende oder nur geringfügig größere Breite auf. Dadurch wird verhindert, dass Rohrleitungen markiert werden, deren Durchmesser größer ist als der Durchmesser der Rohrleitung 1-1. Rohrleitungen mit größerem Durchmesser können schon gar nicht mit einer der vorhandenen Markierungsrollen in Kontakt kommen.

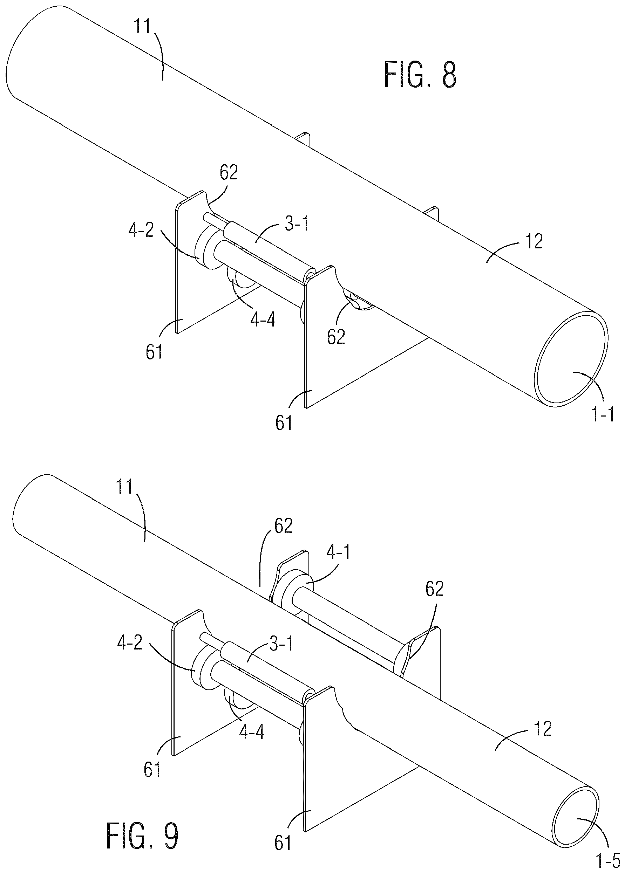

Wie aufgrund der getroffenen Vorkehrungen Rohrleitungen mit verschiedenen Außendurchmessern in Bezug zur Führungsrollen-Markierungsräder-Einheit zu liegen kommen, ist in den Figuren 8 und 9 gezeigt. Die Figur 8 zeigt die einzig mögliche und zugleich vorschriftsmäßige Lage der dicksten bearbeitbaren Rohrleitung 1-1 in Bezug zur Führungsrollen-Markierungsräder-Einheit, und die Figur 9 zeigt die einzig mögliche und zugleich vorschriftsmäßige Lage der dünnsten bearbeitbaren Rohrleitung 1-5 in Bezug zur Führungsrollen-Markierungsräder-Einheit.

Wie erwähnt werden durch den Verstellmechanismus die zu zerschneidende Rohrleitung und die bewegbaren Komponenten des Rohrschneidegerätes in die zum Zerschneiden der Rohrleitung erforderliche Relativlage gebracht. Da einhergehend damit zugleich die Rohrleitung und die dieser zugeordnete Markierungserzeugungsvorrichtung in die zum vorschriftsmäßigen Markieren der Rohrleitung erforderliche Relativlage gebracht werden, ist der Verstellmechanismus zugleich eine Positionierungsvorrichtung, durch welche eine die Markierung erzeugende Markierungserzeugungsvorrichtung automatisch so in Bezug zu einem benachbarten Rohrleitungsstück-Ende positioniert wird, dass die durch die Markierungserzeugungsvorrichtung auf dem Rohrleitungsstück zu erzeugende Markierung einen Abstand zum Rohrleitungsstück-Ende aufweist, welcher der vorgeschriebenen Einstecktiefe des Rohrleitungsstück-Endes in ein daran anzubringendes Fitting entspricht.

Es dürfte einleuchten dass das unter Bezugnahme auf die Figuren 4 bis 9 beschriebene Markierungsvorrichtung mannigfaltig modifizierbar ist. Sämtliche Abwandlungen die bei dem in den Figur 1 gezeigten und unter Bezugnahme darauf beschriebenen Rohrschneidegerät möglich sind, sind auch bei dem in den Figuren 4 bis 9 beschriebenen Gerät identisch oder entsprechend möglich. Außerdem besteht auch keine Einschränkung auf die im Beispiel vorgesehene Zahl von Markierungsrädern und Führungsrollen und deren Anordnung.

Die hier vorgestellte Markierungsvorrichtung erweist sich unabhängig von den Einzelheiten der praktischen Realisierung als sehr vorteilhaft. Durch sie kann verhindert werden oder es zumindest erheblich erschwert werden, dass versehentlich oder vorsätzlich falsch platzierte Markierungen auf durch Fittings miteinander zu verbindende Rohrleitungsstücke aufgebracht werden.

### Bezugszeichenliste

- 1: Rohrleitung
- 1-1: Rohrleitung
- 1-2: Rohrleitung
- 1-3: Rohrleitung
- 1-4: Rohrleitung
- 1-5: Rohrleitung
- 2: Schneidrolle
- 3: Führungsrolle
- 3-1: Führungsrolle
- 3-2: Führungsrolle
- 3-3: Führungsrolle
- 3-4: Führungsrolle
- 4: Markierungserzeugungsvorrichtung / Markierungsrad für 11
- 4a: Markierungserzeugungsvorrichtung / Markierungsrad für 11
- 4b: Markierungserzeugungsvorrichtung / Markierungsrad für 11
- 4-1: Markierungserzeugungsvorrichtung / Markierungsrad für 11
- 4-2: Markierungserzeugungsvorrichtung / Markierungsrad für 11
- 4-3: Markierungserzeugungsvorrichtung / Markierungsrad für 11
- 4-4: Markierungserzeugungsvorrichtung / Markierungsrad für 11
- 5: Markierungserzeugungsvorrichtung / Markierungsrad für 12
- 5-1: Markierungserzeugungsvorrichtung / Markierungsrad für 12
- 5-2: Markierungserzeugungsvorrichtung / Markierungsrad für 12
- 5-3: Markierungserzeugungsvorrichtung / Markierungsrad für 12
- 5-4: Markierungserzeugungsvorrichtung / Markierungsrad für 12

- 11: erster Rohrleitungs-Teil
- 12: zweiter Rohrleitungs-Teil
- 13: Schnittkante zwischen 11 und 12
- 14: Markierung an 11
- 15: Markierung an 12

- 41: Führungskurve für 4
- 42: Markierungsradring
- 43: Markierungsradring
- 44: Nut zwischen 42 und 43
- 51: Führungskurve für 5

- 61: stirnseitigen Wangen eines 3-1 bis 3-4, 4-1 bis 4-4 und 5-1 bis 5-4 tragenden Gestells
- 62: Einschnitt in 61 zur Aufnahme von 1-1 bis 1-5

- 411: rechtwinklig zu 11 verlaufende Abschnitte von 41
- 412: schräg zu 11 verlaufende Abschnitte von 41

- 511: rechtwinklig zu 12 verlaufende Abschnitte von 51
- 512: schräg zu 12 verlaufende Abschnitte von 51

- ET: Abstand zwischen 13 und 14, 15

## Patentansprüche

1. Markierungsvorrichtung zum Anbringen einer Markierung (14, 15) an der Außenseite eines Rohrleitungsstücks (1, 11, 12), **dadurch gekennzeichnet, dass** die Markierungsvorrichtung (4, 41, 5, 51; 3-1 - 3-4, 4-1 - 4-4, 5-1 - 5-4) eine Positionierungsvorrichtung (41, 51) aufweist, durch welche eine die Markierung erzeugende Markierungserzeugungsvorrichtung (4, 5; 4a, 4b; 4-1 - 4-4, 5-1 - 5-4) automatisch so in Bezug zu einem benachbarten Rohrleitungsstück-Ende (13) positioniert wird, dass die durch die Markierungserzeugungsvorrichtung auf dem Rohrleitungsstück zu erzeugende Markierung einen Abstand (ET) zum Rohrleitungsstück-Ende aufweist, welcher der vorgeschriebenen Einstecktiefe des Rohrleitungsstück-Endes in ein daran anzubringendes Fitting entspricht.

2. Markierungsvorrichtung nach Anspruch 1, **dadurch gekennzeichnet, dass** die durch die Markierungsvorrichtung (4, 41, 5, 51; 3-1 - 3-4, 4-1 - 4-4, 5-1 - 5-4) am Rohrleitungsstück (1, 11, 12) anzubringende Markierung (14, 15) so angeordnet und beschaffen ist, dass bei bestimmungsgemäßer Montage des Fittings am Rohrleitungsstück ein Teil der Markierung durch das Fitting bedeckt wird.

3. Markierungsvorrichtung nach einem der vorhergehenden Ansprüche, **dadurch gekennzeichnet, dass** die Markierungserzeugungsvorrichtung (4, 5; 4a, 4b; 4-1 - 4-4, 5-1 - 5-4) dazu ausgelegt ist, eine eine Prägung enthaltende Markierung (14, 15), oder eine eine Gravur enthaltende Markierung (14, 15), oder eine durch einen Laser erzeugte Markierung (14, 15), oder eine durch Bedrucken erzeugte Markierung (14, 15), oder eine durch einen Tintenstrahldruck erzeugte Markierung (14, 15) am Rohrleitungsstück (1, 11, 12) anzubringen.

4. Markierungsvorrichtung nach einem der vorhergehenden Ansprüche, **dadurch gekennzeichnet, dass** die Markierungsvorrichtung (4, 41, 5, 51; 3-1 - 3-4, 4-1 - 4-4, 5-1 - 5-4) für Rohrleitungsstücke (1, 11, 12) mit einem ganz bestimmten Außendurchmesser ausgelegt ist, und dass die Positionierungsvorrichtung (41, 51) so ausgebildet ist, dass die Markierungserzeugungsvorrichtung (4, 5; 4a, 4b; 4-1 - 4-4, 5-1 - 5-4) allenfalls rechtwinklig zur Längsachse der Rohrleitungsstücke bewegbar ist und somit stets einen vorgegebenen, nicht veränderbaren Abstand vom benachbarten Rohrleitungsstück-Ende aufweist.

5. Markierungsvorrichtung nach Anspruch 4, **dadurch gekennzeichnet, dass** die Markierungsvorrichtung (4, 41, 5, 51; 3-1 - 3-4, 4-1 - 4-4, 5-1 - 5-4) so ausgebildet ist, dass durch sie ausschließlich Rohrleitungsstücke (1, 11, 12) mit dem ganz bestimmten Außendurchmesser markierbar sind.

6. Markierungsvorrichtung nach einem der Ansprüche 1 bis 3, **dadurch gekennzeichnet, dass** die Markierungsvorrichtung (4, 41, 5, 51; 3-1 - 3-4, 4-1 - 4-4, 5-1 - 5-4) für Rohrleitungsstücke (1, 11, 12) mit unterschiedlichen Außendurchmessern ausgelegt ist, und die Markierungserzeugungsvorrichtung (4, 5; 4a, 4b; 4-1 - 4-4, 5-1 - 5-4) durch die Positionierungsvorrichtung (41, 51) in einem veränderbaren Abstand vom benachbarten Rohrleitungsstück-Ende positionierbar ist.

7. Markierungsvorrichtung nach Anspruch 6, **dadurch gekennzeichnet, dass** Positionierungsvorrichtung (41, 51) so ausgebildet ist, dass sie die Markierungserzeugungsvorrichtung (4, 5; 4a, 4b; 4-1 - 4-4, 5-1 - 5-4) in einem vom Außendurchmesser des Rohrleitungsstücks (1, 11, 12) abhängenden Abstand vom benachbarten Rohrleitungsstück-Ende positioniert.

8. Markierungsvorrichtung nach Anspruch 6 oder 7, **dadurch gekennzeichnet, dass** die Positionierungsvorrichtung (41, 51) eine Führungskurve umfasst, längs welcher die Markierungserzeugungsvorrichtung (4, 5; 4a, 4b; 4-1 - 4-4, 5-1 - 5-4) oder eine diese tragende Markierungsvorrichtungskomponente bewegbar ist, oder ein Führungskurvengetriebe umfasst, durch welches die Markierungserzeugungsvorrichtung (4, 5; 4a, 4b; 4-1 - 4-4, 5-1 - 5-4) oder eine diese tragende Markierungsvorrichtungskomponente bewegbar ist.

9. Markierungsvorrichtung nach einem der Ansprüche 1 bis 3, **dadurch gekennzeichnet, dass** die Markierungsvorrichtung (4, 41, 5, 51; 3-1 - 3-4, 4-1 - 4-4, 5-1 - 5-4) für Rohrleitungsstücke (1, 11, 12) mit unterschiedlichen Außendurchmessern ausgelegt ist, und mehrere Markierungserzeugungsvorrichtungen (4, 5; 4a, 4b; 4-1 - 4-4, 5-1 - 5-4) enthält, von welchen jede ausschließlich eine einen vorstimmten Abstand vom Rohrleitungsstück-Ende aufweisende Markierung erzeugen kann, und von welchen jede eine Markierung in einem anderen Abstand vom Rohrleitungsstück-Ende erzeugt als die anderen Markierungserzeugungsvorrichtungen, und dass die Positionierungsvorrichtung (41, 51) die Markierungserzeugungsvorrichtungen so in Bezug zum Rohrleitungsstück positioniert, dass die auf dem Rohrleitungsstück zu erzeugende Markierung durch diejenige Markierungserzeugungsvorrichtung erzeugt wird, welche dazu ausgelegt ist, die Markierung in demjenigen Abstand vom Rohrleitungsstück-Ende zu erzeugen, welcher der vorgeschriebenen Einstecktiefe des Rohrleitungsstück-Endes in ein daran anzubringendes Fitting entspricht.

10. Markierungsvorrichtung nach einem der vorhergehenden Ansprüche, **dadurch gekennzeichnet, dass** die Markierungsvorrichtung (4, 41, 5, 51; 3-1 - 3-4, 4-1 - 4-4, 5-1 - 5-4) Bestandteil eines Rohrschneidegerätes ist, welches eine Rohrschneidevorrichtung (2, 3) zum Zerschneiden einer Rohrleitung (1, 11, 12) in zwei Teile enthält.

11. Markierungsvorrichtung nach Anspruch 10, **dadurch gekennzeichnet, dass** die Rohrschneidevorrichtung (2, 3) durch einen Rollenschneider gebildet wird.

12. Markierungsvorrichtung nach Anspruch 10 oder 11, **dadurch gekennzeichnet, dass** die Markierungsvorrichtung (4, 41, 5, 51; 3-1 - 3-4, 4-1 - 4-4, 5-1 - 5-4) so mit der Rohrschneidevorrichtung (2, 3) gekoppelt ist, dass das Markieren der Rohrleitung (1, 11, 12) durch die Markierungsvorrichtung einhergehend mit dem Zerschneiden der Rohrleitung durch die Rohrschneidevorrichtung erfolgt.

13. Markierungsvorrichtung nach einem der Ansprüche 10 bis 12, **dadurch gekennzeichnet, dass** die Markierungsvorrichtung (4, 41, 5, 51; 3-1 - 3-4, 4-1 - 4-4, 5-1 - 5-4) so mit der die Rohrschneidevorrichtung (2, 3) gekoppelt ist, dass das Markieren der Rohrleitung (1, 11, 12) durch die Markierungsvorrichtung und das Zerschneiden der Rohrleitung durch die Rohrschneidevorrichtung gleichzeitig beginnen.

14. Markierungsvorrichtung nach einem der Ansprüche 10 bis 13, **dadurch gekennzeichnet, dass** die Markierungsvorrichtung (4, 41, 5, 51; 3-1 - 3-4, 4-1 - 4-4, 5-1 - 5-4) zwei Markierungserzeugungsvorrichtungen (4, 5; 4a, 4b; 4-1 - 4-4, 5-1 - 5-4) enthält, wobei die eine Markierungserzeugungsvorrichtung (4) diesseits einer durch die Rohrschneidevorrichtung (2, 3) zu erzeugenden Schnittkante (13) angeordnet und zur Markierung eines diesseits der Schnittkante zu liegen kommenden einen Rohrleitungs-Teils (11) vorgesehen ist, und wobei die andere Markierungserzeugungsvorrichtung (5) jenseits der Schnittkante angeordnet und zur Markierung des jenseits der Schnittkante zu liegen kommenden anderen Rohrleitungs-Teils (12) vorgesehen ist.

15. Markierungsvorrichtung nach Anspruch 14, **dadurch gekennzeichnet, dass** die zwei Markierungserzeugungsvorrichtungen (4, 5) so gekoppelt sind, dass die durch sie vorzunehmenden Markierungen (14, 15) gleichzeitig erfolgen.
